# EUROPEAN PATENT SPECIFICATION

(11) **EP 3 954 732 B1**
(45) Date of publication and mention of the grant of the patent: **18.11.2026**
(21) Application number: 20857548.0
(22) Date of filing: 12.08.2020
(51) Int. Cl.: C08K 5/14, C08K 5/3415, C08L 11/00, C08F 236/12, C08F 236/18

(54) **RUBBER COMPOSITION, VULCANIZED PRODUCT, AND VULCANIZED MOLDED ARTICLE**
KAUTSCHUKZUSAMMENSETZUNG, VULKANISIERTES PRODUKT UND VULKANISIERTER FORMARTIKEL
COMPOSITION DE CAOUTCHOUC, PRODUIT VULCANISÉ ET OBJET MOULÉ VULCANISÉ

(30) Priority: 23.08.2019 JP 2019152721
(43) Date of publication of application: 16.02.2022
(73) Proprietor: Denka Company Limited, Tokyo 103-8338 (JP)
(72) Inventor: KONDO, Atsunori, Tokyo 103-8338 (JP); NISHINO, Wataru, Tokyo 103-8338 (JP); ONUKI, Suguru, Tokyo 103-8338 (JP)
(74) Representative: Hoffmann Eitle
(86) International application number: PCT/JP2020/030668
(87) International publication number: WO 2021/039396

(56) References cited:
- JP-A- 2001 173 724
- JP-A- 2003 342 419
- JP-A- 2003 342 420
- JP-A- 2009 029 994
- US-A- 4 248 987
- US-A1- 2018 346 702

## Description

### Technical Field

The present invention relates to a rubber composition, a vulcanizate, a vulcanized molded article, and the like.

### Background Art

Chloroprene-based rubbers are excellent in mechanical properties, ozone resistance, chemical resistance, and the like and have been used in a wide variety of fields such as automotive parts, adhesives, and various industrial rubber parts by utilizing their properties. As a technique capable of using a chloroprene-based rubber, rubber compositions described in Patent Literatures 1 to 3 below have been known. Patent Literature 4 relates to a process for vulcanizing a non-aqueous rubber base comprising chloroprene rubber.

### Citation List

### Patent Literature

Patent Literature 1: Japanese Unexamined Patent Publication No. 2016-23191
Patent Literature 2: Japanese Unexamined Patent Publication No. 2012-111899
Patent Literature 3: Japanese Unexamined Patent Publication No. H9-268239
Patent Literature 4: US 4,248,987 A

### Summary of Invention

### Technical Problem

With respect to the rubber composition containing a chloroprene-based rubber, it is required to provide a vulcanizate having excellent heat resistance and low exothermicity (property that less heat is generated).

An aspect of the present invention is intended to provide a rubber composition capable of obtaining a vulcanizate having excellent heat resistance and low exothermicity. Another aspect of the present invention is intended to provide a vulcanizate of the above-described rubber composition. Still another aspect of the present invention is intended to provide a vulcanized molded article of the above-described rubber composition.

### Solution to Problem

The inventors of the present invention have conducted intensive studies in order to solve such problems, and as a result, they have succeeded in obtaining a vulcanizate having excellent heat resistance and low exothermicity, by mixing specific amounts of a maleimide compound and an organic peroxide with respect to a chloroprene-based rubber, thereby completing the present invention.

An aspect of the present invention relates to a rubber composition containing: 100 parts by mass of a chloroprene-based rubber; 0.50 to 4.0 parts by mass of a maleimide compound; and 0.10 to 2.0 parts by mass of an organic peroxide; wherein a mass ratio A/B of a content A of the maleimide compound with respect to a content B of the organic peroxide is 1.0 to 20.

Another aspect of the present invention relates to a vulcanizate of the aforementioned rubber composition. Still another aspect of the present invention relates to a vulcanized molded article of the aforementioned rubber composition.

### Advantageous Effects of Invention

An aspect of the present invention is intended to provide a rubber composition capable of obtaining a vulcanizate having excellent heat resistance and low exothermicity. Another aspect of the present invention is intended to provide a vulcanizate of the above-described rubber composition. Still another aspect of the present invention is intended to provide a vulcanized molded article of the above-described rubber composition.

### Description of Embodiments

In a case where a plurality of substances corresponding to each component exist in the composition, the content of each component in the composition means the total amount of the plurality of substances that exist in the composition, unless otherwise specified. The term "step" includes not only an independent step but also a step by which an intended action of the step is achieved, though the step cannot be clearly distinguished from other steps. A "(meth)acrylate" means at least one of acrylates and corresponding methacrylates. The same applies also to other similar expressions such as "(meth)acrylic acid".

### <Rubber composition>

A rubber composition of the present embodiment contains (1) 100 parts by mass of a chloroprene (2-chloro-1,3-butadiene)-based rubber, (2) 0.50 to 4.0 parts by mass of a maleimide compound, and (3) 0.10 to 2.0 parts by mass of an organic peroxide. According to the rubber composition of the present embodiment, as a vulcanizate obtained by vulcanizing this rubber composition, a vulcanizate having excellent heat resistance and low exothermicity can be obtained.

The inventors of the present invention have succeeded in obtaining a vulcanizate having excellent heat resistance, low exothermicity, and excellent compression set resistance, by mixing specific amounts of the maleimide compound and the organic peroxide mentioned above with respect to the chloroprene-based rubber. According to the rubber composition of the present embodiment, a vulcanizate having excellent heat resistance, low exothermicity, and excellent compression set resistance can also be obtained.

### (1) Chloroprene-based rubber

The chloroprene-based rubber has a structural unit derived from chloroprene and has chloroprene as a monomer unit (a chloroprene monomer unit). Examples of a chloroprene polymer include a homopolymer of chloroprene and a copolymer of chloroprene (a copolymer of chloroprene and a monomer copolymerizable with chloroprene), and a mixture of these polymers may be used. The polymer structure of the polymer is not particularly limited.

Examples of the monomer copolymerizable with chloroprene include esters of (meth)acrylic acid (such as methyl (meth)acrylate, butyl (meth)acrylate, and 2-ethylhexyl (meth)acrylate), hydroxyalkyl (meth)acrylates (such as 2-hydroxymethyl (meth)acrylate, 2-hydroxyethyl (meth)acrylate, and 2-hydroxypropyl (meth)acrylate), 2,3-dichloro-1,3-butadiene, 1-chloro-1,3-butadiene, butadiene, isoprene, ethylene, styrene, and acrylonitrile. The monomer copolymerizable with chloroprene is not limited to one kind, and, for example, the copolymer of chloroprene may be a copolymer obtained by copolymerizing three or more kinds of monomers containing chloroprene.

From the viewpoint of easily obtaining a vulcanizate having excellent heat resistance, low exothermicity, and excellent compression set resistance, the chloroprene-based rubber preferably contains at least one selected from a homopolymer of chloroprene, a copolymer of chloroprene and 2,3-dichloro-1,3-butadiene, and a copolymer of chloroprene and acrylonitrile, and more preferably contains at least one selected from a homopolymer of chloroprene and a copolymer of chloroprene and acrylonitrile. The copolymer of chloroprene and 2,3-dichloro-1,3-butadiene is a copolymer having a structural unit derived from chloroprene and a structural unit derived from 2,3-dichloro-1,3-butadiene and is a copolymer having chloroprene and 2,3-dichloro-1,3-butadiene as monomer units (a chloroprene monomer unit and a 2,3-dichloro-1,3-butadiene monomer unit). The copolymer of chloroprene and acrylonitrile is a copolymer having a structural unit derived from chloroprene and a structural unit derived from acrylonitrile and is a copolymer having chloroprene and acrylonitrile as monomer units (a chloroprene monomer unit and an acrylonitrile monomer unit).

In the case of using a copolymer of chloroprene as the chloroprene-based rubber, the content (copolymerization amount) of the structural unit derived from chloroprene is preferably in the following range on the basis of the total mass of the chloroprene-based rubber, from the viewpoint of easily obtaining a vulcanizate having excellent heat resistance, low exothermicity, and excellent compression set resistance. The content of the structural unit derived from chloroprene is preferably 50% by mass or more, more preferably more than 50% by mass, further preferably 60% by mass or more, particularly preferably 70% by mass or more, extremely preferably 80% by mass or more, highly preferably 85% by mass or more, and even more preferably 90% by mass or more. The content of the structural unit derived from chloroprene is less than 100% by mass, preferably 99% by mass or less, more preferably 95% by mass or less, further preferably 93% by mass or less, and further preferably 91% by mass or less. From these viewpoints, the content of the structural unit derived from chloroprene is preferably 50% by mass or more and less than 100% by mass.

In the case of using a copolymer of chloroprene as the chloroprene-based rubber, the content (copolymerization amount) of the structural unit derived from a monomer copolymerizable with chloroprene is preferably in the following range on the basis of the total mass of the chloroprene-based rubber, from the viewpoint of easily obtaining a vulcanizate having excellent heat resistance, low exothermicity, and excellent compression set resistance and the viewpoint of easily exhibiting the effect obtained by copolymerizing these monomers. The content of the structural unit is preferably 50% by mass or less, more preferably less than 50% by mass, further preferably 40% by mass or less, particularly preferably 30% by mass or less, extremely preferably 20% by mass or less, highly preferably 15% by mass or less, and even more preferably 10% by mass or less. The content of the structural unit is more than 0% by mass, preferably 1% by mass or more, more preferably 5% by mass or more, further preferably 7% by mass or more, and particularly preferably 9% by mass or more. From these viewpoints, the content of the structural unit is preferably more than 0% by mass and 50% by mass or less. From the same viewpoints, the content of the structural unit derived from acrylonitrile preferably satisfies each of the aforementioned ranges.

The chloroprene-based rubber (a homopolymer of chloroprene, a copolymer of chloroprene, or the like) may be a sulfur-modified chloroprene-based rubber, a mercaptan-modified chloroprene-based rubber, a xanthogen-modified chloroprene-based rubber, a dithiocarbonate-based chloroprene-based rubber, a trithiocarbonate-based chloroprene-based rubber, a carbamate-based chloroprene-based rubber, or the like. In the case of using a homopolymer of chloroprene as the chloroprene-based rubber, the homopolymer of chloroprene preferably contains a mercaptan-modified chloroprene-based rubber, from the viewpoint of easily obtaining a vulcanizate having excellent heat resistance, low exothermicity, and excellent compression set resistance.

The weight average molecular weight (Mw), the number average molecular weight (Mn), and the molecular weight distribution (polydispersity of molecular weight, Mw/Mn) of the chloroprene-based rubber are preferably in the following ranges, from the viewpoint of easily obtaining a vulcanizate having excellent heat resistance, low exothermicity, and excellent compression set resistance.

The weight average molecular weight of the chloroprene-based rubber is preferably 10×10³ g/mol or more, more preferably 50×10³ g/mol or more, further preferably 100×10³ g/mol or more, particularly preferably 300×10³ g/mol or more, extremely preferably 400×10³ g/mol or more, and highly preferably 450×10³ g/mol or more. The weight average molecular weight of the chloroprene-based rubber is preferably 5000×10³ g/mol or less, more preferably 3000×10³ g/mol or less, further preferably 2000×10³ g/mol or less, particularly preferably 1000×10³ g/mol or less, extremely preferably 800×10³ g/mol or less, and highly preferably 500×10³ g/mol or less. From these viewpoints, the weight average molecular weight of the chloroprene-based rubber is preferably 10×10³ to 5000×10³ g/mol, more preferably 100×10³ to 2000×10³ g/mol, and further preferably 300×10³ to 1000×10³ g/mol.

The number average molecular weight of the chloroprene-based rubber is preferably 1×10³ g/mol or more, more preferably 5×10³ g/mol or more, further preferably 10×10³ g/mol or more, particularly preferably 50×10³ g/mol or more, extremely preferably 100×10³ g/mol or more, and highly preferably 130×10³ g/mol or more. The number average molecular weight of the chloroprene-based rubber is preferably 1000×10³ g/mol or less, more preferably 800×10³ g/mol or less, further preferably 500×10³ g/mol or less, particularly preferably 300×10³ g/mol or less, extremely preferably 200×10³ g/mol or less, and highly preferably 150×10³ g/mol or less. From these viewpoints, the number average molecular weight of the chloroprene-based rubber is preferably 1×10³ to 1000×10³ g/mol, more preferably 10×10³ to 500×10³ g/mol, and further preferably 50×10³ to 300×10³ g/mol.

The molecular weight distribution of the chloroprene-based rubber is preferably 1.0 or more, more preferably 1.5 or more, further preferably 2.0 or more, particularly preferably 2.5 or more, extremely preferably 3.0 or more, highly preferably 3.2 or more, and even more preferably 3.4 or more. The molecular weight distribution of the chloroprene-based rubber is preferably 10 or less, more preferably 8.0 or less, further preferably 5.0 or less, particularly preferably 4.0 or less, extremely preferably 3.8 or less, highly preferably 3.5 or less, and even more preferably 3.4 or less. From these viewpoints, the molecular weight distribution of the chloroprene-based rubber is preferably 1.0 to 10, more preferably 2.0 to 5.0, and further preferably 2.5 to 4.0.

The weight average molecular weight (Mw) and the number average molecular weight (Mn) of the chloroprene-based rubber can be obtained by measuring with gel permeation chromatography (GPC) and converting in terms of polystyrene, and specifically, can be measured by the methods described in Examples.

The content of the chloroprene-based rubber is preferably 50% by mass or more, more preferably more than 50% by mass, further preferably 70% by mass or more, particularly preferably 90% by mass or more, extremely preferably 95% by mass or more, highly preferably more than 95% by mass, even more preferably 96% by mass or more, further preferably 98% by mass or more, and particularly preferably 99% by mass or more, on the basis of the total mass of the rubber components contained in the rubber composition, from the viewpoint of easily obtaining a vulcanizate having excellent heat resistance, low exothermicity, and excellent compression set resistance. The rubber component contained in the rubber composition may be an aspect composed of a chloroprene-based rubber (substantially 100% by mass of the rubber component contained in the rubber composition is a chloroprene-based rubber).

The content of the chloroprene-based rubber is preferably in the following range on the basis of the total mass of the rubber composition. The content of the chloroprene-based rubber is preferably 30% by mass or more, more preferably 40% by mass or more, further preferably 45% by mass or more, particularly preferably 50% by mass or more, extremely preferably more than 50% by mass, highly preferably 55% by mass or more, and even more preferably 60% by mass or more, from the viewpoint of easily obtaining a vulcanizate having excellent heat resistance, low exothermicity, and excellent compression set resistance. The content of the chloroprene-based rubber is preferably 90% by mass or less, more preferably 85% by mass or less, further preferably 80% by mass or less, particularly preferably 75% by mass or less, extremely preferably 70% by mass or less, and highly preferably 65% by mass or less, from the viewpoint of easily obtaining a vulcanizate having excellent heat resistance, low exothermicity, and excellent compression set resistance. From these viewpoints, the content of the chloroprene-based rubber is preferably 30 to 90% by mass, more preferably 40 to 80% by mass, and further preferably 50 to 70% by mass.

A method for producing a chloroprene-based rubber includes a polymerization step of polymerizing a raw material monomer containing chloroprene. The chloroprene-based rubber can be obtained, for example, by emulsion polymerization of a raw material monomer containing chloroprene (for example, a raw material monomer containing chloroprene as a main component) using an emulsifying dispersant in the presence of a polymerization reaction catalyst, a catalyst-activating agent, a polymerization initiator, a chain transfer agent, or the like.

Examples of the emulsifying dispersant include alkali metal salts of saturated or unsaturated fatty acids having 6 to 22 carbon atoms, alkali metal salts of rosin acids or disproportionated rosin acids (for example, potassium rosinate), and alkali metal salts of β-naphthalenesulfonic acid-formalin condensates (for example, sodium salt).

Examples of the polymerization reaction catalyst include inorganic peroxides such as potassium sulfate; and organic peroxides such as ketone peroxides, peroxy ketals, hydroperoxides, dialkyl peroxides, and diacyl peroxides.

Examples of the catalyst-activating agent include sodium sulfite, potassium sulfite, iron (II) oxide, anthraquinone, sodium β-sulfonate, formamidine sulfonic acid, and L-ascorbic acid.

The polymerization initiator is not particularly limited, and a known polymerization initiator, which is generally used in the emulsion polymerization of chloroprene, can be used. Examples of the polymerization initiator include potassium persulfate, ammonium persulfate, sodium persulfate, hydrogen peroxide, and t-butyl hydroperoxide.

The chain transfer agent is not particularly limited, and a known chain transfer agent, which is generally used in the emulsion polymerization of chloroprene, can be used. Examples of the chain transfer agent include long chain alkylmercaptans such as n-dodecylmercaptan, t-dodecylmercaptan, and n-octylmercaptan; xanthogen compounds such as diisopropylxanthogen disulfide and diethylxanthogen disulfide; iodoform; and thiocarbonyl compounds such as benzyl 1-pyrroldithiocarbamate (also known as benzyl 1-pyrrolcarbodithioate), benzylphenyl carbodithioate, 1-benzyl-N,N-dimethyl-4-aminodithiobenzoate, 1-benzyl-4-methoxydithiobenzoate, 1-phenylethylimidazole dithiocarbamate (also known as 1-phenylethylimidazole carbodithioate), benzyl-1-(2-pyrrolidinone)dithiocarbamate (also known as benzyl-1-(2-pyrrolidinone)carbodithioate), benzylphthalimidyl dithiocarbamate (also known as benzylphthalimidyl carbodithioate), 2-cyanoprop-2-yl-1-pyrroldithiocarbamate (also known as 2-cyanoprop-2-yl-1-pyrrolcarbodithioate), 2-cyanobut-2-yl-1-pyrroldithiocarbamate (also known as 2-cyanobut-2-yl-1-pyrrolcarbodithioate), benzyl-1-imidazole dithiocarbamate (also known as benzyl-1-imidazole carbodithioate), 2-cyanoprop-2-yl-N,N-dimethyldithiocarbamate, benzyl-N,N-diethyl dithiocarbamate, cyanomethyl-1-(2-pyrrolidone)dithiocarbamate, 2-(ethoxycarbonylbenzyl)prop-2-yl-N,N-diethyl dithiocarbamate, 1-phenyl ethyl dithiobenzoate, 2-phenylprop-2-yl dithiobenzoate, 1-aceto-1-yl-ethyl dithiobenzoate, 1-(4-methoxyphenyl)ethyl dithiobenzoate, benzyl dithioacetate, ethoxycarbonylmethyl dithioacetate, 2-(ethoxycarbonyl)prop-2-yl dithiobenzoate, 2-cyanoprop-2-yl dithiobenzoate, t-butyl dithiobenzoate, 2,4,4-trimethylpenta-2-yl dithiobenzoate, 2-(4-chlorophenyl)-prop-2-yl dithiobenzoate, 3-vinylbenzyl dithiobenzoate, 4-vinylbenzyl dithiobenzoate, benzyl diethoxyphosphinyl dithioformate, t-butyltrithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzyl sulfanyl butyric acid, dibenzyl tetrathioterephthalate, carboxymethyl dithiobenzoate, dithiobenzoate terminal-carrying poly(ethylene oxide), 4-cyano-4-methyl-4-thiobenzylsulfanyl butyrate terminal-carrying poly(ethylene oxide), 2-[(2-phenylethanethioyl)sulfanyl]propanoic acid, 2-[(2-phenylethanethioyl)sulfanyl]succinic acid, potassium 3,5-dimethyl-1H-pyrazol-1-carbodithioate, cyanomethyl-3,5-dimethyl-1H-pyrazol-1-carbodithioate, cyanomethylmethyl-(phenyl)dithiocarbamate, benzyl-4-chlorodithiobenzoate, phenyl methyl-4-chlorodithiobenzoate, 4-nitrobenzyl-4-chlorodithiobenzoate, phenyl prop-2-yl-4-chlorodithiobenzoate, 1-cyano-1-methyl ethyl-4-chlorodithiobenzoate, 3-chloro-2-butenyl-4-chlorodithiobenzoate, 2-chloro-2-butenyl dithiobenzoate, benzyl dithioacetate, 3-chloro-2-butenyl-1H-pyrrol-1-dithiocarboxylic acid, 2-cyanobutane-2-yl-4-chloro-3,5-dimethyl-1H-pyrazol-1-carbodithioate, cyanomethyl methyl(phenyl)carbodithioate, 2-cyano-2-propyldodecyl trithiocarbonate, dibenzyl trithiocarbonate, butylbenzyl trithiocarbonate, 2-[[(butylthio)thioxomethyl]thio]propionic acid, 2-[[(dodecylthio)thioxomethyl]thio]propionic acid, 2-[[(butylthio)thioxomethyl]thio] succinic acid, 2-[[(dodecylthio)thioxomethyl]thio] succinic acid, 2-[[(dodecylthio)thioxomethyl]thio]-2-methyl propionic acid, 2,2'-[carbonothioylbis(thio)]bis[2-methyl propionic acid], 2-amino-1-methyl-2-oxoethylbutyl trithiocarbonate, benzyl-2-[(2-hydroxyethyl)amino]-1-methyl-2-oxoethyl trithiocarbonate, 3-[[[(t-butyl)thio]thioxomethyl]thio]propionic acid, cyanomethyldodecyl trithiocarbonate, diethylaminobenzyl trithiocarbonate, and dibutylaminobenzyl trithiocarbonate.

The polymerization temperature of the chloroprene-based rubber is not particularly limited, and as a temperature at which emulsion polymerization is generally performed, the polymerization temperature is preferably 0°C to 50°C and more preferably 20°C to 50°C. The final polymerization rate of the chloroprene-based rubber obtained in the aforementioned polymerization step is not particularly limited, and it is preferable to arbitrarily adjust the final polymerization rate within a range of 30 to 100%. In order to adjust the final conversion rate, when the conversion rate becomes a desired value, a polymerization terminator for terminating the polymerization reaction can be added to terminate the polymerization.

The polymerization terminator is not particularly limited, and a polymerization terminator, which is commonly used, can be used. Examples of the polymerization terminator include thiodiphenylamine (also known as phenothiazine), 4-t-butylcatechol, and 2,2-methylenebis-4-methyl-6-t-butylphenol.

Next, the unreacted monomer can be removed from a polymer solution obtained by the polymerization step. The method thereof is not particularly limited, and for example, a steam stripping method is mentioned. Thereafter, the pH is adjusted, steps of freeze coagulation, washing, hot air drying, and the like of ordinary methods are performed, and thereby a chloroprene-based rubber can be obtained.

### (2) Maleimide compound

The maleimide compound is a compound having a skeleton derived from maleimide. The maleimide compound can be used as a vulcanizing agent in the rubber composition. Examples of the maleimide compound include bismaleimide compounds such as N,N'-phenylenebismaleimide (such as N,N'-o-phenylenebismaleimide, N,N'-m-phenylenebismaleimide, and N,N'-p-phenylenebismaleimide), N,N'-diphenylmethanebismaleimide (such as N,N'-(4,4'-diphenylmethane)bismaleimide), 2,2-bis-[4-(4-maleimidophenoxy)phenyl]propane, bis(3-ethyl-5-methyl-4-maleimidophenyl)methane, bisphenol A diphenylether bismaleimide, 3,3'-dimethyl-5,5'-diethyl-4,4'-diphenylmethanebismaleimide, 4-methyl-1,3-phenylenebismaleimide, and 1,6'-bismaleimide-(2,2,4-trimethyl)hexane. From the viewpoint of easily improving the heat resistance, the low exothermicity, and the compression set resistance of a vulcanizate (for example, a vulcanized molded article), the maleimide compound preferably contains a bismaleimide compound, more preferably contains at least one selected from N,N'-phenylenebismaleimide and N,N'-diphenylmethanebismaleimide, further preferably contains N,N'-phenylenebismaleimide, and particularly preferably contains N,N'-m-phenylenebismaleimide.

The content of the maleimide compound is 0.50 to 4.0 parts by mass with respect to 100 parts by mass of the chloroprene-based rubber. When the content of the maleimide compound is 0.50 parts by mass or more, since the vulcanization of the rubber composition sufficiently proceeds, the low exothermicity of a vulcanizate is improved and the compression set resistance of a vulcanizate is easily improved. When the content of the maleimide compound is 4.0 parts by mass or less, since the rubber elasticity of a vulcanizate (for example, a vulcanized molded article) is sufficiently secured, the heat resistance (for example, elongation at break after heat aging) of a vulcanizate is improved.

The content of the maleimide compound is preferably 0.70 parts by mass or more, more preferably 1.0 part by mass or more, further preferably 1.2 parts by mass or more, particularly preferably 1.5 parts by mass or more, extremely preferably 1.8 parts by mass or more, and highly preferably 2.0 parts by mass or more, from the viewpoint of easily obtaining a vulcanizate having excellent heat resistance, low exothermicity, and excellent compression set resistance. The content of the maleimide compound is preferably 3.8 parts by mass or less, more preferably 3.5 parts by mass or less, further preferably 3.2 parts by mass or less, particularly preferably 3.0 parts by mass or less, extremely preferably 2.8 parts by mass or less, highly preferably 2.5 parts by mass or less, even more preferably 2.2 parts by mass or less, and further preferably 2.0 parts by mass or less, from the viewpoint of easily obtaining a vulcanizate having excellent heat resistance, low exothermicity, and excellent compression set resistance. From these viewpoints, the content of the maleimide compound is preferably 0.70 to 3.0 parts by mass, more preferably 1.0 to 3.0 parts by mass, and further preferably 1.0 to 2.0 parts by mass. The content of the maleimide compound may be 2.2 parts by mass or more, 2.5 parts by mass or more, 2.8 parts by mass or more, or 3.0 parts by mass or more. The content of the maleimide compound may be 1.8 parts by mass or less, 1.5 parts by mass or less, 1.2 parts by mass or less, 1.0 part by mass or less, or 0.70 parts by mass or less.

The content of the maleimide compound is preferably in the following range on the basis of the total mass of the rubber composition. The content of the maleimide compound is preferably 0.10% by mass or more, more preferably 0.20% by mass or more, further preferably 0.30% by mass or more, particularly preferably 0.40% by mass or more, extremely preferably 0.50% by mass or more, highly preferably 0.70% by mass or more, even more preferably 1.0% by mass or more, and further preferably 1.2% by mass or more, from the viewpoint of easily obtaining a vulcanizate having excellent heat resistance, low exothermicity, and excellent compression set resistance. The content of the maleimide compound is preferably 3.0% by mass or less, more preferably 2.8% by mass or less, further preferably 2.5% by mass or less, particularly preferably 2.0% by mass or less, extremely preferably 1.8% by mass or less, highly preferably 1.5% by mass or less, and even more preferably 1.3% by mass or less, from the viewpoint of easily obtaining a vulcanizate having excellent heat resistance, low exothermicity, and excellent compression set resistance. From these viewpoints, the content of the maleimide compound is preferably 0.10 to 3.0% by mass, more preferably 0.20 to 2.8% by mass, and further preferably 0.50 to 2.0% by mass. The content of the maleimide compound may be 1.3% by mass or more, 1.5% by mass or more, or 1.8% by mass or more. The content of the maleimide compound may be 1.2% by mass or less, 1.0% by mass or less, 0.70% by mass or less, 0.50% by mass or less, or 0.40% by mass or less.

### (3) Organic peroxide

The organic peroxide can be used as a vulcanization aid in the rubber composition. Examples of the organic peroxide include dicumyl peroxide, benzoyl peroxide, 1,1-bis(t-butylperoxy)-3,5,5-trimethylcyclohexane, diisobutyryl peroxide, cumylperoxy neodecanoate, di-n-propylperoxy dicarbonate, diisopropylperoxy dicarbonate, di-sec-butylperoxy dicarbonate, 1,1,3,3-tetramethylbutylperoxy neodecanoate, di(4-t-butylcyclohexyl) peroxy dicarbonate, di(2-ethylhexyl) peroxydicarbonate, t-hexylperoxy neodecanoate, t-butylperoxy neodecanoate, t-butylperoxy neoheptanoate, t-hexylperoxypivalate, t-butylperoxypivalate, di(3,5,5-trimethylhexanoyl)peroxide, dilauroyl peroxide, 1,1,3,3-tetramethylbutyl peroxy-2-ethylhexanoate, disuccinic acid peroxide, 2,5-dimethyl-2,5-di(2-ethylhexanoylperoxy)hexane, t-hexylperoxy-2-ethylhexanoate, di(4-methylbenzoyl)peroxide, t-butylperoxy-2-ethylhexanoate, di(3-methylbenzoyl)peroxide, benzoyl(3-methylbenzoyl)peroxide, dibenzoylperoxide, 1,1-di(t-butylperoxy)-2-methylcyclohexane, 1,1-di(t-hexylperoxy)-3,3,5-trimethylcyclohexane, 1,1-di(t-hexylperoxy)cyclohexane, 1,1-di(t-butylperoxy)cyclohexane, 2,2-di(4,4-di-(t-butylperoxy)cyclohexyl)propane, t-hexylperoxyisopropyl monocarbonate, t-butylperoxy maleic acid, t-butylperoxy-3,5,5-trimethylhexanoate, t-butylperoxy laurate, t-butylperoxyisopropyl monocarbonate, t-butylperoxy 2-ethylhexyl monocarbonate, t-hexylperoxy benzoate, 2,5-di-methyl-2,5-di(benzoylperoxy)hexane, t-butylperoxy acetate, 2,2-di-(t-butylperoxy)butane, t-butylperoxy benzoate, n-butyl-4,4-di-(t-butylperoxy)valerate, 1,4-bis[(t-butylperoxy)isopropyl]benzene, di-t-hexyl peroxide, 2,5-dimethyl-2,5-di(t-butylperoxy)hexane, t-butylcumyl peroxide, di-t-butyl peroxide, p-menthane hydroperoxide, 2,5-dimethyl-2,5-di(t-butylperoxy)hexyne-3, diisopropylbenzene hydroperoxide, 1,1,3,3-tetramethylbutyl hydroperoxide, cumene hydroperoxide, and t-butyl hydroperoxide. From the viewpoint of easily improving the low exothermicity and the compression set resistance of a vulcanizate (for example, a vulcanized molded article), the organic peroxide preferably contains at least one selected from peroxy ketals and dialkyl peroxides, more preferably contains at least one selected from n-butyl-4,4-di-(t-butylperoxy)valerate and 1,4-bis[(t-butylperoxy)isopropyl]benzene, and further preferably contains 1,4-bis[(t-butylperoxy)isopropyl]benzene.

The content of the organic peroxide is 0.10 to 2.0 parts by mass with respect to 100 parts by mass of the chloroprene-based rubber. When the content of the organic peroxide is 0.10 parts by mass or more, since the effect of promoting the vulcanization of the rubber composition is sufficiently obtained so that the vulcanization sufficiently proceeds, the heat resistance (for example, elongation at break after heat aging) and the low exothermicity of a vulcanizate are improved and the compression set resistance of a vulcanizate is easily improved. When the content of the organic peroxide is 2.0 parts by mass or less, since a sharp increase in vulcanization density is suppressed, the heat resistance (for example, elongation at break after heat aging) of a vulcanizate is improved.

The content of the organic peroxide is preferably 0.15 parts by mass or more, more preferably 0.20 parts by mass or more, further preferably 0.30 parts by mass or more, and particularly preferably 0.40 parts by mass or more, from the viewpoint of easily obtaining a vulcanizate having excellent heat resistance, low exothermicity, and excellent compression set resistance. The content of the organic peroxide is preferably 1.8 parts by mass or less, more preferably 1.7 parts by mass or less, further preferably 1.5 parts by mass or less, particularly preferably 1.2 parts by mass or less, extremely preferably 1.0 part by mass or less, highly preferably 0.80 parts by mass or less, even more preferably 0.50 parts by mass or less, and further preferably 0.40 parts by mass or less, from the viewpoint of easily obtaining a vulcanizate having excellent heat resistance. From these viewpoints, the content of the organic peroxide is preferably 0.15 to 1.8 parts by mass, more preferably 0.20 to 1.0 part by mass, and further preferably 0.30 to 0.80 parts by mass. The content of the organic peroxide is preferably 0.50 parts by mass or more, more preferably 0.80 parts by mass or more, further preferably 1.0 part by mass or more, particularly preferably 1.2 parts by mass or more, extremely preferably 1.5 parts by mass or more, and highly preferably 1.7 parts by mass or more, from the viewpoint of easily obtaining a vulcanizate having excellent low exothermicity and excellent compression set resistance. The content of the organic peroxide may be 0.30 parts by mass or less, 0.20 parts by mass or less, or 0.15 parts by mass or less.

The content of the organic peroxide is preferably in the following range on the basis of the total mass of the rubber composition. The content of the organic peroxide is preferably 0.01% by mass or more, more preferably 0.05% by mass or more, further preferably 0.06% by mass or more, particularly preferably 0.07% by mass or more, extremely preferably 0.10% by mass or more, highly preferably 0.15% by mass or more, even more preferably 0.20% by mass or more, and further preferably 0.24% by mass or more, from the viewpoint of easily obtaining a vulcanizate having excellent heat resistance, low exothermicity, and excellent compression set resistance. The content of the organic peroxide is preferably 2.0% by mass or less, more preferably 1.8% by mass or less, further preferably 1.5% by mass or less, particularly preferably 1.2% by mass or less, extremely preferably 1.0% by mass or less, highly preferably 0.80% by mass or less, even more preferably 0.50% by mass or less, further preferably 0.30% by mass or less, and particularly preferably 0.25% by mass or less, from the viewpoint of easily obtaining a vulcanizate having excellent heat resistance. From these viewpoints, the content of the organic peroxide is preferably 0.01 to 2.0% by mass, more preferably 0.05 to 1.5% by mass, and further preferably 0.20 to 0.80% by mass. The content of the organic peroxide is preferably 0.25% by mass or more, more preferably 0.30% by mass or more, further preferably 0.50% by mass or more, particularly preferably 0.80% by mass or more, and extremely preferably 1.0% by mass or more, from the viewpoint of easily obtaining a vulcanizate having excellent low exothermicity and excellent compression set resistance. The content of the organic peroxide may be 0.24% by mass or less, 0.20% by mass or less, 0.15% by mass or less, 0.10% by mass or less, 0.07% by mass or less, or 0.06% by mass or less.

The mass ratio A/B of the content A of the maleimide compound with respect to the content B of the organic peroxide is 1.0 to 20, and preferably in the following range. The mass ratio A/B is 1.0 or more, and may be more preferably 1.2 or more, further preferably 1.3 or more, particularly preferably 1.5 or more, extremely preferably 2.0 or more, highly preferably 3.0 or more, even more preferably 4.0 or more, and further preferably 5.0 or more, from the viewpoint of easily obtaining a vulcanizate that is excellent in balance of heat resistance, low exothermicity, and compression set resistance. The mass ratio A/B is 20 or less, and may be more preferably 15 or less, further preferably 10 or less, particularly preferably 9.0 or less, extremely preferably 8.0 or less, highly preferably 7.0 or less, even more preferably 6.0 or less, and further preferably 5.0 or less, from the viewpoint of easily obtaining a vulcanizate that is excellent in balance of heat resistance, low exothermicity, and compression set resistance since a sharp increase in vulcanization density is less likely to occur so that a decrease in heat resistance (for example, elongation at break after heat aging) and compression set resistance is easily suppressed. From these viewpoints, the mass ratio A/B is 1.0 to 20, and may be more preferably 1.0 to 10, further preferably 1.0 to 7.0, and particularly preferably 2.0 to 7.0. The mass ratio A/B may be 6.0 or more, 7.0 or more, 8.0 or more, 9.0 or more, 10 or more, or 15 or more. The mass ratio A/B may be 4.0 or less, 3.0 or less, 2.0 or less, 1.5 or less, 1.3 or less, or 1.2 or less.

### (4) Other compounds

The rubber composition of the present embodiment may contain, as components different from the aforementioned components, a rubber component (excluding the chloroprene-based rubber); a vulcanizing agent (excluding the maleimide compound); a vulcanization accelerator; a vulcanization aid (excluding the organic peroxide); a plasticizer; carbon black; a filler (reinforcing agent); a processing aid; an anti-aging agent; or the like.

The rubber component may contain chlorinated polyethylene or may not contain chlorinated polyethylene. The content of the chlorinated polyethylene may be 5% by mass or less, less than 5% by mass, 3% by mass or less, 1% by mass or less, or less than 1% by mass on the basis of the total mass of the rubber components contained in the rubber composition.

The vulcanizing agent is not particularly limited, and is preferably a metal oxide. Examples of the metal oxide include zinc oxide, magnesium oxide, lead oxide, trilead tetraoxide, iron trioxide, titanium dioxide, calcium oxide, and hydrotalcite. The content of the vulcanizing agent (excluding the maleimide compound) may be 3 to 15 parts by mass with respect to 100 parts by mass of the chloroprene-based rubber.

As a vulcanization accelerator, a compound, which is generally used in the vulcanization of the chloroprene-based rubber, can be used. Examples of the vulcanization accelerator include vulcanization accelerators such as thiourea-based, guanidine-based, thiuram-based, and thiazole-based vulcanization accelerators; dimethylammonium hydrogen isophthalate; and 1,2-dimercapto-1,3,4-thiadiazole derivatives. Examples of the thiourea-based vulcanization accelerator include ethylene thiourea, diethyl thiourea, trimethyl thiourea, triethyl thiourea, and N,N'-diphenyl thiourea, and at least one selected from trimethylthiourea and ethylene thiourea is preferred.

The rubber composition of the present embodiment can contain at least one compound selected from a bifunctional ester compound and a trifunctional ester compound, as a vulcanization aid, from the viewpoint of improving the vulcanization rate or the vulcanization density of the rubber composition. Specific examples of the bifunctional ester compound and the trifunctional ester compound include trimethylol propane, ethylene glycol dimethacrylate, triallyl isocyanate, and triallyl cyanate.

The plasticizer is not particularly limited as long as it is compatible with the chloroprene-based rubber, but examples thereof include vegetable oils (such as rape seed oil), phthalate-based plasticizers, DOS, DOA, ester-based plasticizers, polyether ester-based plasticizers, thioether-based plasticizers, aromatic oils, and naphthene oils, and one kind or plural kinds thereof can be used according to properties required for the rubber composition. The content of the plasticizer may be 5 to 50 parts by mass with respect to 100 parts by mass of the chloroprene-based rubber.

Examples of the filler (reinforcing agent) include carbon black, silica, clay, talc, and calcium carbonate. The content of the filler may be 5 to 100 parts by mass with respect to 100 parts by mass of the chloroprene-based rubber.

Examples of the processing aid include fatty acids such as stearic acid; paraffin-based processing aids such as polyethylene; and fatty acid amides. The content of the processing aid (excluding the organic peroxide) may be 0.5 to 5 parts by mass with respect to 100 parts by mass of the chloroprene-based rubber.

Examples of the anti-aging agent include an amine-based anti-aging agent, an imidazole-based anti-aging agent, a metal salt of carbamic acid, a phenol-based anti-aging agent, and wax. Examples of the amine-based anti-aging agent having a large effect of improving heat resistance include 4,4'-bis(α,α-dimethylbenzyl)diphenylamine and octylated diphenylamine, and the effect of improving heat resistance of 4,4'-bis(α,α-dimethylbenzyl)diphenylamine is particularly large.

The rubber composition of the present embodiment can be obtained by kneading the aforementioned component at a temperature equal to or lower than the vulcanization temperature thereof. As a kneading apparatus, a mixer, a banbury mixer, a kneader mixer, a twin roll, or the like can be used.

### <Unvulcanized molded article, vulcanizate, and vulcanized molded article>

An unvulcanized molded article of the present embodiment uses the rubber composition of the present embodiment and is a molded article (molded product) of the rubber composition (unvulcanized state) of the present embodiment. A method for producing an unvulcanized molded article of the present embodiment includes a step of molding the rubber composition (unvulcanized state) of the present embodiment. The unvulcanized molded article of the present embodiment is composed of the rubber composition (unvulcanized state) of the present embodiment.

A vulcanizate of the present embodiment is a vulcanizate of the rubber composition of the present embodiment. A method for producing a vulcanizate of the present embodiment includes a step of vulcanizing the rubber composition of the present embodiment.

A vulcanized molded article of the present embodiment is a vulcanized molded article of the rubber composition of the present embodiment. The vulcanized molded article of the present embodiment uses the vulcanizate of the present embodiment and is a molded article (molded product) of the vulcanizate of the present embodiment. The vulcanized molded article of the present embodiment is composed of the vulcanizate of the present embodiment. Regarding the vulcanized molded article of the present embodiment, the rate of change of compression set as measured according to JIS K 6262:2013 under test conditions of 130°C (test temperature) and 72 hours (test time) is preferably 40% or less. The vulcanized molded article of the present embodiment preferably contains 0.01 to 2% by mass of a maleimide compound on the basis of the total mass of the vulcanized molded article.

The vulcanized molded article of the present embodiment can be obtained by molding a vulcanizate obtained by vulcanizing the rubber composition (unvulcanized state) of the present embodiment, and can also be obtained by vulcanizing a molded article obtained by molding the rubber composition (unvulcanized state) of the present embodiment. A method for producing a vulcanized molded article of the present embodiment includes a step of molding the vulcanizate of the present embodiment or a step of vulcanizing the unvulcanized molded article of the present embodiment.

The unvulcanized molded article, the vulcanizate, and the vulcanized molded article of the present embodiment can be used as rubber parts in various industrial fields such as buildings, structures, ships, rails, coal mine, and automobiles, and can be used as rubber parts such as automobile rubber members (for example, automobile sealing materials), hose materials, molded rubber articles, gaskets, rubber rolls, industrial cables, and industrial conveyor belts.

Examples of a method of molding the rubber composition (unvulcanized state) and the vulcanizate of the present embodiment include press molding, extrusion molding, and calender molding. The temperature at which the rubber composition is vulcanized may be appropriately set according to the composition of the rubber composition, and is preferably 140°C to 220°C and more preferably 160°C to 190°C. The vulcanizing time for vulcanizing the rubber composition may be appropriately set according to the composition of the rubber composition, the shape of the unvulcanized molded article, or the like, and may be 10 to 60 minutes.

### Examples

### <Production of chloroprene-acrylonitrile copolymer rubber>

To a polymerization tank having an inner volume of 3 L and equipped with a heating/cooling jacket and a stirrer, 24 parts by mass of a chloroprene monomer, 24 parts by mass of an acrylonitrile monomer, 0.5 parts by mass of diethylxanthogen disulfide, 200 parts by mass of pure water, 5.00 parts by mass of potassium rosinate (manufactured by Harima Chemicals, Inc.), 0.40 parts by mass of sodium hydroxide, and 2.0 parts by mass of a sodium salt of β-naphthalene sulfonic acid formalin condensate (manufactured by Kao Corporation) were added. 0.1 parts by mass of potassium persulfate was added as a polymerization initiator, and emulsion polymerization was performed under a nitrogen flow at a polymerization temperature of 40°C. The aforementioned chloroprene monomer was added portionwise after 20 seconds from polymerization initiation, and based on the refrigerant calorimetric change for 10 seconds after polymerization initiation, the portionwise addition flow rate was adjusted by an electromagnetic valve, and thereafter the flow rate was re-adjusted every 10 seconds to ensure continuity. At the time point when the polymerization rate with respect to the total amount of the chloroprene monomer and the acrylonitrile monomer became 50%, 0.02 parts by mass of phenothiazine as a polymerization terminator was added to terminate the polymerization. Thereafter, by removing the unreacted monomer in the reaction solution under reduced pressure, a chloroprene-acrylonitrile copolymer latex was obtained.

The aforementioned polymerization rate of the chloroprene-acrylonitrile copolymer latex was calculated from the dry mass when the chloroprene-acrylonitrile copolymer latex was air-dried. Specifically, calculation was performed by the following Formula (I). In the formula, the "solid concentration" refers to the concentration [% by mass] of the solid fraction obtained by heating 2 g of the sampled chloroprene-acrylonitrile copolymer latex at 130°C to remove volatile components such as the solvent (water), volatile chemicals, and the raw materials. The "total charged amount" refers to the total amount of the raw materials, the reagents, and the solvent (water) which had been charged into the polymerization tank from the polymerization initiation through a certain time. The "non-evaporated residual fraction" refers to the mass of the chemicals which did not evaporate under a condition of 130°C and remained as a solid fraction together with the polymer, among the chemicals and the raw materials which had been charged from the polymerization initiation through a certain time. The monomer charged amount refers to the total amount of the monomer which was charged initially to the polymerization tank and the monomer which was added portionwise from the polymerization initiation through a certain time. Note that, the "monomer" described here refers to the total amount of the chloroprene monomer and the acrylonitrile monomer. 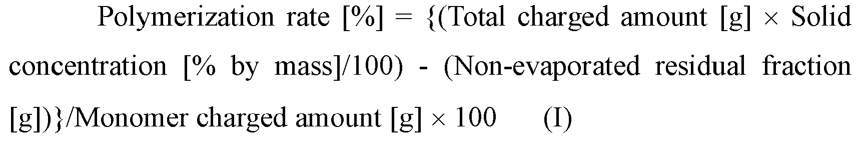 Polymerization rate [%] = {(Total charged amount [g] × Solid concentration [% by mass]/100) - (Non-evaporated residual fraction [g])}/Monomer charged amount [g] × 100 (I)

After the pH of the aforementioned chloroprene-acrylonitrile copolymer latex was adjusted to 7.0 using acetic acid or sodium hydroxide, the chloroprene-acrylonitrile copolymer latex was subjected to freeze coagulation on a metal plate cooled to -20°C so as to be demulsifed, thereby obtaining a sheet. This sheet was washed with water and dried for 15 minutes at 130°C, thereby obtaining a chloroprene-acrylonitrile copolymer rubber in a solid form.

The weight average molecular weight (Mw), the number average molecular weight (Mn), and the molecular weight distribution (Mw/Mn) of the chloroprene-acrylonitrile copolymer rubber were measured by a high-speed GPC apparatus (TOSOH HLC-8320GPC: manufactured by Tosoh Corporation) (in terms of standard polystyrene) after a solution having a sample adjustment concentration of 0.1% by mass was obtained by adjusting the aforementioned chloroprene-acrylonitrile copolymer rubber with THF. At this time, TSK Guard Column HHR-H was used as a precolumn, three columns of HSK gel GMHHR-H were used as an analytical column, and the solution was allowed to flow out at a sample pump pressure of 8.0 to 9.5 MPa and a flow rate of 1 mL/min at 40°C and detected by a differential refractometer.

The outflow time and the molecular weight were obtained using a calibration curve prepared by measuring total of nine standard polystyrene samples whose molecular weights listed below were known. 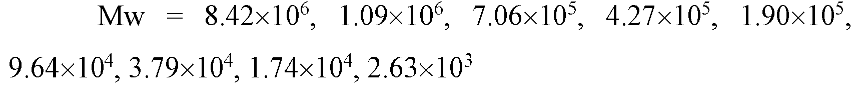 Mw = 8.42×106, 1.09×106, 7.06×105, 4.27×105, 1.90×105 9.64×104, 3.79×104, 1.74×104, 2.63×103

The weight average molecular weight (Mw) of the chloroprene-acrylonitrile copolymer rubber was 473×10³ g/mol, the number average molecular weight (Mn) was 138×10³ g/mol, and the molecular weight distribution (Mw/Mn) was 3.4.

The content of the structural unit derived from the acrylonitrile in the chloroprene-acrylonitrile copolymer rubber was calculated from the content of the nitrogen atom in the chloroprene-acrylonitrile copolymer rubber. Specifically, the content of the structural unit derived from acrylonitrile was calculated by measuring the content of the nitrogen atom in 100 mg of the chloroprene-acrylonitrile copolymer rubber using an element analysis apparatus (SUMIGRAPH 220F: manufactured by Sumika Chemical Analysis Service, Ltd.). The amount of the structural unit derived from acrylonitrile was 9.9% by mass.

The aforementioned element analysis was performed as follows. As for the electric furnace temperature, a reaction furnace, a reduction furnace, a column temperature, and a detector temperature were set at 900°C, 600°C, 70°C, and 100°C, respectively, oxygen was flowed as a combustion gas at 0.2 ml/min, and helium was flowed as a carrier gas at 80 ml/min. A standard curve was obtained using aspartic acid whose nitrogen content is known (10.52%) as a standard substance.

### <Production of rubber composition>

Rubber compositions of Examples 1 to 9 and Comparative Examples 1 to 6 were obtained by kneading the chloroprene-based rubber, the maleimide compound, and the organic peroxide, which are described in Table 1, 5 parts by mass of zinc oxide, 4 parts by mass of magnesium oxide, 10 parts by mass of a plasticizer, 40 parts by mass of a filler, 1 part by mass of a processing aid, and 3 parts by mass of an anti-aging agent with a 8-inch open roll.

A rubber composition of Comparative Example 7 was obtained by kneading the chloroprene-based rubber, which is described in Table 1, 5 parts by mass of zinc oxide, 4 parts by mass of magnesium oxide, 10 parts by mass of a plasticizer, 40 parts by mass of a filler, 1 part by mass of a processing aid, 3 parts by mass of an anti-aging agent, and 1 part by mass of a vulcanization accelerator with a 8-inch open roll.

Respective components used for obtaining the rubber composition are as follows.
Chloroprene-based rubber 1: chloroprene-acrylonitrile copolymer rubber produced by the aforementioned method
Chloroprene-based rubber 2: mercaptan-modified chloroprene-based rubber (homopolymer of mercaptan-modified chloroprene), crude rubber, Mooney viscosity ML₁₊₄ (100°C) = 60, manufactured by Denka Company Limited
Maleimide compound 1: N,N'-m-phenylenebismaleimide, "VULNOC (registered trademark) PM" manufactured by OUCHI SHINKO CHEMICAL INDUSTRIAL CO., LTD.
Maleimide compound 2: N,N'-(4,4'-diphenylmethane)bismaleimide, "BMI-1000" manufactured by Daiwa Fine Chemicals Co., Ltd.
Organic peroxide 1: 1,4-bis[(t-butylperoxy)isopropyl]benzene, "PERBUTYL (registered trademark) P-40" manufactured by NOF CORPORATION
Organic peroxide 2: n-butyl-4,4-di-(t-butylperoxy)valerate, "PERHEXA (registered trademark) V-40" manufactured by NOF CORPORATION
Zinc oxide: vulcanizing agent, "Zinc Oxide No. 2" manufactured by SAKAI CHEMICAL INDUSTRY CO., LTD.
Magnesium oxide: vulcanizing agent, "KYOWAMAG (registered trademark) 30" manufactured by Kyowa Chemical Industry Co., Ltd.
Plasticizer: polyether ester-based plasticizer, "ADK CIZER (registered trademark) RS-700" manufactured by ADEKA Corporation
Filler: carbon black, "ASAHI #60UG" manufactured by Asahi Carbon Co., Ltd.
Processing aid: lubricant, stearic acid, "Stearic Acid 50S" manufactured by New Japan Chemical Co., Ltd.
Anti-aging agent: 4,4'-bis(α,α-dimethylbenzyl)diphenylamine, "NOCRAC (registered trademark) CD" manufactured by OUCHI SHINKO CHEMICAL INDUSTRIAL CO., LTD.
Vulcanization accelerator: "NOCCELER TMU" manufactured by OUCHI SHINKO CHEMICAL INDUSTRIAL CO., LTD.

### <Production of vulcanized molded article>

The aforementioned rubber composition was subjected to press vulcanization under a condition of 180°C × 30 minutes to produce a sheet-shaped vulcanized molded article having a thickness of 2 mm.

### <Evaluation of vulcanized molded article>

The aforementioned vulcanized molded article was evaluated as follows. Evaluation results are shown in Table 1.

### (Heat resistance)

The elongation at break X1 (Eb) was measured by performing a tensile test according to JIS K 6251:2010 using the aforementioned vulcanized molded article. The elongation at break X2 (Eb) was measured by performing a tensile test according to JIS K 6257:2017 after the vulcanized molded article was left to stand under conditions of 130°C and 72 hours. The rate of change of elongation at break (ΔEb, unit: %) was calculated according to the equation below. A case where the rate of change of elongation at break is -30% or more was determined as favorable. $Rate of change \left(%\right) = \left[\left(X2-X1\right)/X1\right] \times 100$

### (Compression set resistance (CS))

The rate of change of compression set before and after the aforementioned vulcanized molded article was left to stand under test conditions of 130°C and 72 hours was measured according to JIS K 6262:2013. A case where the rate of change of compression set is 40% or less was determined as favorable.

### (Low exothermicity)

Low exothermicity was evaluated by Goodrich Flexometer (JIS K 6265). The Goodrich Flexometer is a test method of applying repeated dynamic load on a test piece such as vulcanized rubber and evaluating fatigue characteristics for the heat generated on the inside of the test piece, and specifically, it is a method of measuring a change in the heat generation temperature and the creep amount of the test piece over time, when a static initial load is applied to the test piece under a certain temperature condition and a sinusoidal vibration at a certain amplitude is further applied thereon. According to JIS K 6265:2018, the calorific value (ΔT, unit: °C) was measured using the aforementioned vulcanized molded article under conditions of a temperature of 50°C, a deformation of 0.175 inches, a load of 55 pounds, and a frequency per minute of 1800. A case where the calorific value is 40°C or lower was determined as favorable.

**[Table 1]**

| | | Example | | | | | | | | | Comparative Example | | | | | | |
|---|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 | 7 |
| Blanding [parts by mass] | Chloroprene-based rubber 1 | 100 | 100 | 100 | 100 | 100 | 100 | 100 | 100 | | 100 | 100 | 100 | 100 | 100 | 100 | 100 |
| | Chloroprene-based rubber 2 | | | | | | | | | 100 | | | | | | | |
| | Maleimide compound 1 | 2.0 | 2.0 | 2.0 | 1.0 | 3.0 | 0.50 | | 2.0 | 2.0 | 0.30 | 5.0 | 2.0 | 0.60 | 2.0 | | |
| | Maleimide compound 2 | | | | | | | 2.0 | | | | | | | | | |
| | Organic peroxide 1 | 0.40 | 1.7 | 0.10 | 0.12 | 0.40 | 0.40 | 0.40 | | 0.40 | 0.30 | 0.50 | 3.0 | 0.07 | | 0.50 | |
| | Organic peroxide 2 | | | | | | | | 0.40 | | | | | | | | |
| Mass ratio | Maleimide compound/organic peroxide | 5.0 | 1.2 | 20 | 8.3 | 7.5 | 1.3 | 5.0 | 5.0 | 5.0 | 1.0 | 10 | 0.7 | 8.6 | - | 0 | - |
| Heat resistance [%] | | -8 | -29 | -12 | -14 | -8 | -27 | -12 | -7 | -15 | -28 | -33 | -56 | -42 | -12 | -34 | -22 |
| Compression set resistance [%] | | 21 | 14 | 38 | 32 | 24 | 33 | 23 | 28 | 26 | 41 | 36 | 15 | 62 | 42 | 27 | 41 |
| Low exothermicity [°C] | | 28 | 25 | 34 | 34 | 28 | 38 | 30 | 31 | 27 | 47 | 30 | 29 | 59 | 46 | 36 | 43 |

From the result shown in Table 1, according to the rubber compositions of Examples, a vulcanizate (vulcanized molded article) having excellent heat resistance, low exothermicity, and excellent compression set resistance can be obtained. Such a vulcanizate can be suitably used as various rubber parts.

## Claims

1. A rubber composition comprising: 100 parts by mass of a chloroprene-based rubber; 0.50 to 4.0 parts by mass of a maleimide compound; and 0.10 to 2.0 parts by mass of an organic peroxide; wherein a mass ratio A/B of a content A of the maleimide compound with respect to a content B of the organic peroxide is 1.0 to 20.

2. The rubber composition according to claim **1,** wherein a mass ratio A/B of a content A of the maleimide compound with respect to a content B of the organic peroxide is 1.0 to 10.

3. The rubber composition according to claim 1 or 2, wherein the chloroprene-based rubber comprises at least one selected from a homopolymer of chloroprene, a copolymer of chloroprene and 2,3-dichloro-1,3-butadiene, and a copolymer of chloroprene and acrylonitrile.

4. The rubber composition according to any one of claims 1 to 3, wherein a content of the chloroprene-based rubber is 98% by mass or more on the basis of a total mass of rubber components contained in the rubber composition.

5. A vulcanizate of the rubber composition according to any one of claims 1 to 4.

6. A vulcanized molded article of the rubber composition according to any one of claims 1 to 4.

7. The vulcanized molded article according to claim 6, wherein a rate of change of compression set as measured according to JIS K 6262:2013 under test conditions of 130°C and 72 hours is 40% or less.

## Patentansprüche

1. Kautschukzusammensetzung, umfassend: 100 Masseteile eines Kautschuks auf Chloroprenbasis; 0,50 bis 4,0 Masseteile einer Maleimidverbindung; und 0,10 bis 2,0 Masseteile eines organischen Peroxids; wobei das Massenverhältnis A/B eines Gehalts A der Maleimidverbindung zum Gehalt B des organischen Peroxids 1,0 bis 20 beträgt.

2. Kautschukzusammensetzung gemäß Anspruch 1, wobei das Massenverhältnis A/B eines Gehalts A der Maleimidverbindung zum Gehalt B des organischen Peroxids 1,0 bis 10 beträgt.

3. Kautschukzusammensetzung gemäß Anspruch 1 oder 2, wobei der Kautschuk auf Chloroprenbasis umfasst mindestens eines, ausgewählt aus einem Homopolymer aus Chloropren, einem Copolymer aus Chloropren und 2,3-Dichlor-1,3-butadien, und einem Copolymer aus Chloropren und Acrylnitril.

4. Kautschukzusammensetzung gemäß mindestens einem der Ansprüche 1 bis 3, wobei der Gehalt an Kautschuk auf Chloroprenbasis 98 Massenprozent oder mehr, bezogen auf die Gesamtmasse der in der Kautschukzusammensetzung enthaltenen Kautschukkomponenten, beträgt.

5. Vulkanisat der Kautschukzusammensetzung gemäß mindestens einem der Ansprüche 1 bis 4.

6. Vulkanisierter Formkörper aus der Kautschukzusammensetzung gemäß mindestens einem der Ansprüche 1 bis 4.

7. Vulkanisierter Formkörper gemäß Anspruch 6, wobei die Änderungsrate der Druckverformungsrest (rate of change of compression set), gemessen gemäß JIS K 6262:2013 unter Prüfbedingungen von 130 °C und 72 Stunden, 40 % oder weniger beträgt.

## Revendications

1. Composition de caoutchouc, comprenant : 100 parties en masse d'un caoutchouc à base de chloroprène ; 0,50 à 4,0 parties en masse d'un composé de maléimide ; et 0,10 à 2,0 parties en masse d'un peroxyde organique ; dans laquelle un rapport massique A/B d'une teneur A du composé de maléimide par rapport à une teneur B du peroxyde organique est de 1,0 à 20.

2. Composition de caoutchouc selon la revendication 1, dans laquelle un rapport massique A/B d'une teneur A du composé de maléimide par rapport à une teneur B du peroxyde organique est de 1,0 à 10.

3. Composition de caoutchouc selon la revendication 1 ou la revendication 2, dans laquelle le caoutchouc à base de chloroprène comprend au moins un élément choisi parmi un homopolymère de chloroprène, un copolymère de chloroprène et 2,3-dichloro-1,3-butadiène et un copolymère de chloroprène et d'acrylonitrile.

4. Composition de caoutchouc selon l'une quelconque des revendications 1 à 3, dans laquelle la teneur en caoutchouc à base de chloroprène est de 98 % en masse ou plus sur la base de la masse totale des composants de caoutchouc contenus dans la composition de caoutchouc.

5. Produit vulcanisé de la composition de caoutchouc selon l'une quelconque des revendications 1 à 4.

6. Objet moulé vulcanisé de la composition de caoutchouc selon l'une quelconque des revendications 1 à 4.

7. Objet moulé vulcanisé selon la revendication 6, dans lequel un taux de variation de la déformation rémanente après compression tel que mesuré selon la norme JIS K 6262:2013 dans des conditions d'essai de 130 °C et 72 heures est de 40 % ou moins.
